# EUROPEAN PATENT APPLICATION

(11) **EP 1 729 508 A2**
(43) Date of publication of application: **06.12.2006**
(21) Application number: 06114157.8
(22) Date of filing: 18.05.2006
(51) Int. Cl.: H04N 5/225

(54) **Camera module**

(30) Priority: 02.06.2005 CN 200510075490
(71) Applicant: ASUSTeK Computer Inc., Peitou, Taipei City (TW)
(72) Inventor: Lee, Yi-Ming, Taipei (TW); Chen, Yung-Chuan, Taipei (TW); Chen, Yen-Kuang, Taipei (TW)
(74) Representative: Barth, Stephan Manuel

(57) **Abstract**

A camera module includes a housing, and the housing has an opening. The housing having a magnetic material or the magnetic component disposed in the housing can be used to absorb both the particles surrounding the camera module and the particles entering the housing through the opening.

## Description

This application claims the benefit of People's Republic of China application Serial No. 200510075490.2, filed June 2, 2005, the subject matter of which is incorporated herein by reference.

### BACKGROUND OF THE INVENTION

### Field of the Invention

The invention relates in general to a camera module, and more particularly to a camera module having a magnetic material.

### Description of the Related Art

With the rapid advance in optic technology, camera modules are widely used in digital camera, camera mobile phone and digital video for applying to functions of image fetching, image recording, and image playing.

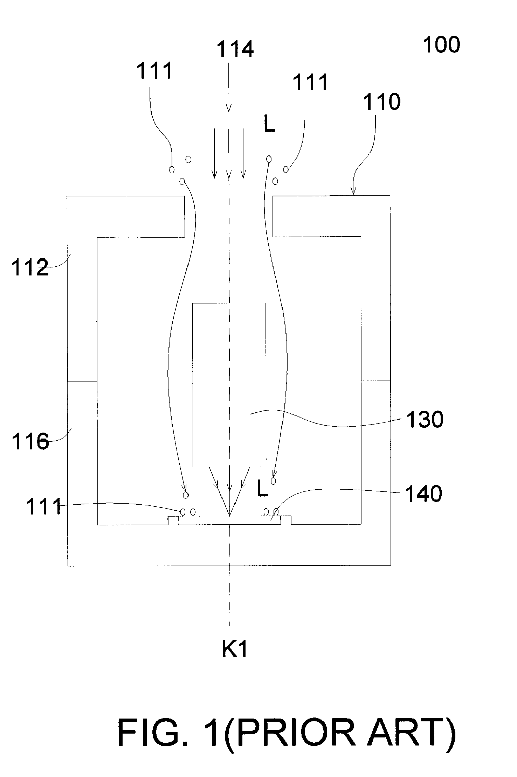

FIG. 1 is a cross-sectional view of a conventional camera module. Referring to FIG. 1, a conventional open type camera module 100 includes a housing 110, a lens module 130 and a sensor 140. The housing 110 includes an upper cover 112, a transparent region 114 and a lower cover 116. The transparent region 114 is formed on the upper cover 112, so that the camera module 100 has an opening structure. The lens module 130 is disposed in the housing 110, and the sensor 140 is disposed on the lower cover 116. Furthermore, the transparent region 114, the lens module 130 and the sensor 140 are positioned on the same optical axis K1.

The light L penetrating the transparent region 114 is focused on the sensor 140 via the lens module 130 to generate an image signal. Therefore cleanness of the sensor 140 is crucial to image quality.

However, during the manufacturing process or assembly process, particles 111 such as cast iron filings or metal powders are likely to be generated due to the coupling or friction between the metal parts. Nonetheless, when the camera module 100 is used under normal circumstances, a large volume of particles 111 already exist in the air. As shown in FIG. 1, the particles 111 are easily to enter the camera module 100 through the transparent region 114 and alighted on the surface of the sensor 140. As a result, problems such as white spots, blurred image would occur, reducing the yield rate and the lifespan of the digital camera.

### SUMMARY OF THE INVENTION

It is therefore an object of the invention to provide a camera module. Using a housing having a magnetic force or using the magnetic component disposed in the housing, attracts the metal particles around the magnetic component or the housing, so that most of the particles are prevented from tarnishing the sensor of the camera module to improve the image quality. Thus, the yield rate of the camera module is increased, and the lifespan of the camera module is prolonged.

The embodiment of the invention achieves the above-identified object by providing a camera module including a housing. The housing has an opening. The housing having a magnetic material disposed in the housing can be used to absorb both the particles surrounding the camera module and the particles entering the housing through the opening.

The embodiment of the invention achieves the above-identified object by providing a camera module including a housing and a magnetic component. The housing has an opening, and the magnetic component is disposed in the housing for absorbing the particles entering the housing through the opening.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 is a cross-sectional view of a conventional camera module;

FIG. 2 is a cross-sectional view of a camera module according to a first embodiment of the invention;

FIG. 3 is a cross-sectional view of a camera module according to a second embodiment of the invention; and

FIG. 4 is a cross-sectional view of a camera module according to a third embodiment of the invention.

### DETAILED DESCRIPTION OF THE INVENTION

### First Embodiment

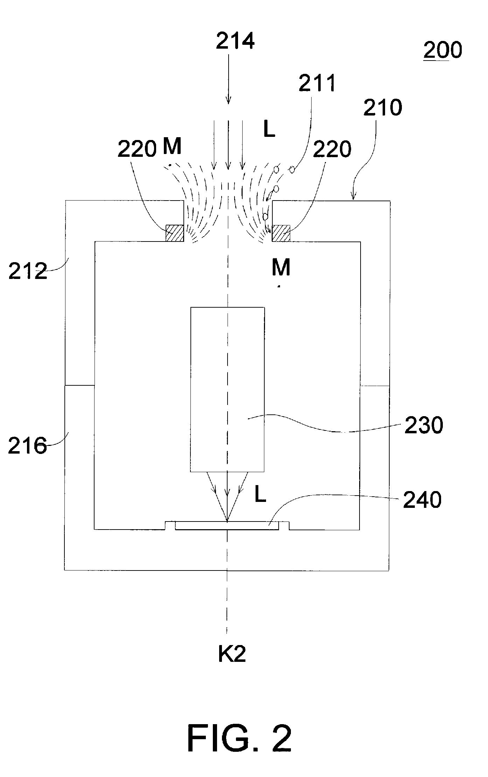

Referring to FIG. 2, a cross-sectional view of a camera module according to a first embodiment of the invention is shown. In FIG. 2, the camera module 200 includes a housing 210, a magnetic component 220, a lens module 230 and a sensor 240. The housing 210 includes an upper cover 212, a lower cover 216 and a transparent region 214. The upper cover 212 is coupled to the lower cover 216. The transparent region 214 is formed on the upper cover 212. The light L enters the camera module 200 through the transparent region 214. A magnet in the present embodiment exemplifies the magnetic component 220, which can be an electrified magnetic core or magnetic matter. The magnetic component 220 is embedded to be surrounding the transparent region 214. The lens module 230 is disposed in the housing 210. The sensor 240 is disposed on the lower cover 216. Furthermore, the transparent region 214, the lens module 230 and the sensor 240 are positioned on the same optical axis K2. The lens module 230 can move forwards and backwards along the optical axis K2 to focus the incident light L on the sensor 240.

Once the open type camera module 200 is exposed in the air, no matter is during the manufacturing process or service, particles in the air are easy to enter the housing 210 through the transparent region 214. Experiment shows that more than 30% of the particles are metal particles 211. According to the present embodiment, the magnetic component 220 is embedded to be surrounding the transparent region 214, so that a tight magnetic net M1 is formed surrounding the transparent region 214. During the course when the metal particles 211 in the air are passing through the magnetic net M1 to enter the transparent region 214, the metal particles 211 are alighted on the surface of the magnetic component 220, lest the metal particles 211 might enter the housing 210 to be alighted on the sensor 240, thereby deteriorating image quality.

### Second Embodiment

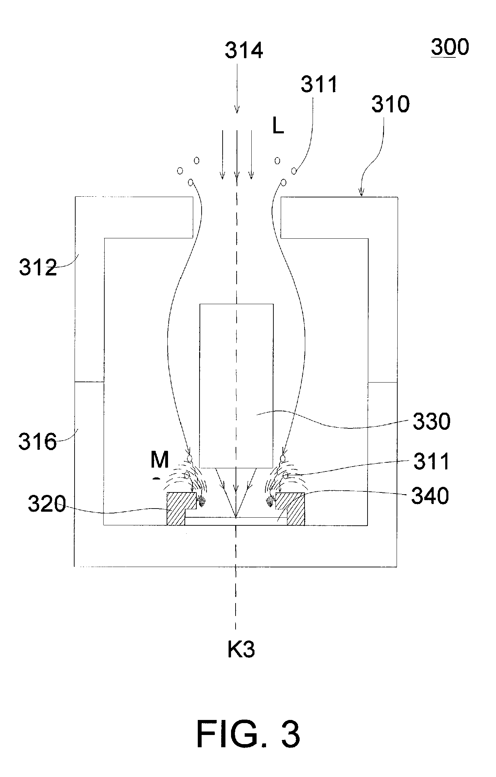

Referring to FIG. 3, a cross-sectional view of a camera module according to a second embodiment of the invention. The camera module 300 includes a housing 310, a magnetic component 320, a lens module 330 and a sensor 340. The housing 310 includes an upper cover 312, a lower cover 316 and a transparent region 314.

The camera module 300 of the present embodiment differs the camera module 200 of the first embodiment in that the magnetic component 320 surrounds the peripheral of the sensor 340 and is disposed on the lower cover 316, so the magnetic component 320 can form a tight magnetic net M2 surrounding the sensor 340 and covering atop of the entire the sensor 340. When entering the housing 310, the metal particles 311 would be alighted on the surface of the magnetic component 320 near the surface of the sensor 340 during the course of passing through the magnet net M2, so that the metal particles 311 are prevented from tarnishing the sensor 340 and that image quality is increased.

In the above two embodiments, the camera module 200 is exemplified by the magnetic component 220 being embedded to be surrounding the transparent region 214, while the camera module 300 is exemplified by the magnetic component 320 surrounding the peripheral of the sensor 340 to be disposed on the lower cover 316. However, in the camera module 200 (300), the magnetic component 320 can be disposed surrounding the peripheral of the lens module 330 or disposed in any position on the inner lateral surface of the housing. Any designs capable of forming a magnetic net to effectively absorb the metal particles entering the housing through the transparent region, thereby improving image quality are within the scope of protection of the invention.

### Third Embodiment

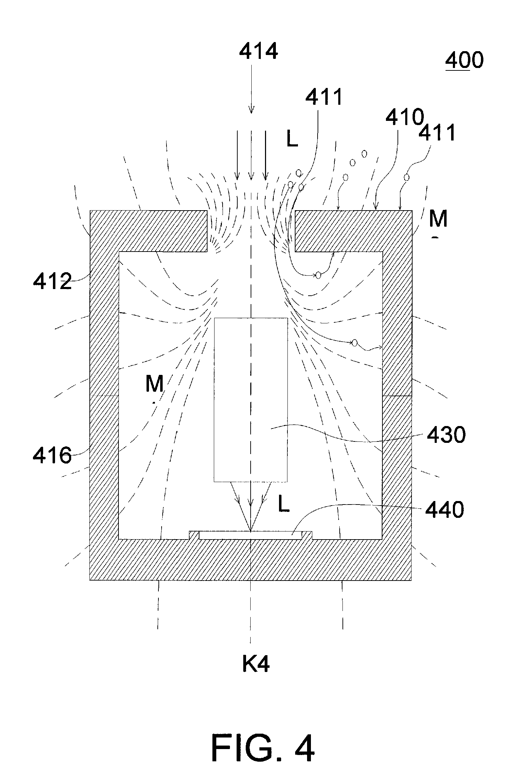

Referring to FIG. 4, a cross-sectional view of camera module according to a third embodiment of the invention is shown. Camera module 400 includes a housing 410 with magnetic material, a lens module 430 and a sensor 440. The housing 410 includes an upper cover 412, a lower cover 416 and a transparent region 414. The camera module 400 of the present embodiment differs with the camera module 200 (300) of the first embodiment and the second embodiment in that the camera module 400 is without a magnetic component and that the housing 410 has an evenly distributed magnetic material. Other similarities are not repeated here. A magnetic powder in the present embodiment exemplifies the magnetic material, which can be any magnetic materials.

In the present embodiment, the magnetic material is evenly distributed on the housing 410, so that a magnetic net M3 is formed in the peripheral of the housing 410 and that a magnetic net M4 is formed in the housing 410. When the metal particles 411 are near the housing 410, the metal particles 411 would be alighted on the surface of the housing 410 and can not enter the housing 410 due to the function of the magnetic net M3. Despite that part of the metal particles 411 may enter the housing 410 through the transparent region 414, the metal particles 411 would be alighted on the inner surface of the housing 410 in the course of entering the housing 410 due to the function of the magnetic net M4. The metal particles 411 are prevented from the housing 410 but alighted on the sensor 440, so that image quality is increased.

In the third embodiment, a magnetic material being evenly distributed on the housing 410 exemplifies the camera module 400 of the invention. However, the magnetic material of invention can be distributed on an area of the housing surrounding the transparent region or evenly distributed on the lower cover or the inner lateral surface of the housing. Any variations that absorb and prevent metal particles from entering the housing through the transparent region by forming a magnetic region so that the metal particles are not alighted on the sensor and that image quality is increased are within the scope of protection of the technology of the invention.

Moreover, the invention can be applicable to camera module with any types of opening. Any designs that form a magnetic region to absorb metal particles so as to increase image quality by disposing a magnetic component in the camera module or by using a housing having a magnetic material are within the scope of protection of the invention.

By disposing a magnetic component in the camera module or using the housing having a magnetic material, the camera module disclosed in above embodiments of the invention permits metal particles to be absorbed by the magnetic component or the housing before reaching the sensor, so that most of the particles are prevented from tarnishing the sensor and that image quality is increased. Thus, the yield rate of the camera module is increased, and the lifespan of the camera module is prolonged.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A camera module, comprising:
a housing having an opening, wherein a magnetic force is provided within the housing for absorbing particles surrounding the camera module and entering the housing through the opening.

2. The camera module according to claim 1, wherein the opening is a transparent region of the camera module.

3. The camera module according to claim 1, wherein the housing comprises a magnetic material distributed on an area of the housing adjacent to the opening.

4. The camera module according to claim 1, wherein the housing further comprises a lower cover including a sensor disposed thereon, and a magnetic material is distributed in the lower cover.

5. The camera module according to claim 3, wherein the magnetic material is evenly distributed in the housing.

6. The camera module according to claim 3, wherein the magnetic material is evenly distributed on an inner lateral surface of the housing.

7. The camera module according to claim 3, wherein the magnetic material is a magnetic powder.

8. A camera module, comprising:
a housing having an opening; and
a magnetic component disposed in the housing for absorbing particles.

9. The camera module according to claim 8, wherein the opening is a transparent region of the camera module.

10. The camera module according to claim 8, wherein the magnetic component is embedded in an area of the housing adjacent to the opening.

11. The camera module according to claim 10, wherein the magnetic component surrounds the opening.

12. The camera module according to claim 8, wherein the camera module further comprises a lens module disposed in the housing, and the magnetic component surrounds the lens module.

13. The camera module according to claim 8, wherein the camera module further comprises a lower cover including a sensor disposed thereon, and the magnetic component is disposed on the lower cover and surrounds the sensor.

14. The camera module according to claim 8, wherein the magnetic component is disposed on an inner lateral surface of the housing.

15. The camera module according to claim 8, wherein the magnetic component is a magnet.
